# EUROPÄISCHE PATENTSCHRIFT

(11) **EP 0 479 074 B1**
(45) Veröffentlichungstag und Bekanntmachung des Hinweises auf die Patenterteilung: **24.04.1996**
(21) Anmeldenummer: 91116077.8
(22) Anmeldetag: 21.09.1991
(51) Int. Cl.: F16C 29/06, A61B 19/02, A61B 10/00, C02F 1/00, B65F 1/00

(54) **Kugelumlaufeinheit für eine Linearkugelführung**
Recirculating ball unit for a linear ball guide
Unité à recirculation de billes pour palier linéaire à billes

(30) Priorität: 04.10.1990 DE 4031354
(43) Veröffentlichungstag der Anmeldung: 08.04.1992
(73) Patentinhaber: JACOB, Werner, D-60598 Frankfurt (DE)
(72) Erfinder: JACOB, Werner, D-60598 Frankfurt (DE)
(74) Vertreter: Harwardt, Günther, Dipl.-Ing.

(56) Entgegenhaltungen:
- EP-A- 0 392 261
- FR-A- 2 154 078
- FR-A- 2 381 204
- FR-A- 2 521 662
- US-A- 3 014 382
- US-A- 3 476 445
- US-A- 4 025 128
- US-A- 4 512 617

## Beschreibung

Die Erfindung betrifft eine Kugelumlaufeinheit für eine Linearführung, mit einem Grundkörper und einem im Grundkörper angeordneten Käfig, in dem, über dem Querschnitt verteilt, Kugelreihen angeordnet sind, deren sich im Tragabschnitt befindliche Kugeln aus dem Käfig radial nach innen zwecks Abstützung an einer im Querschnitt kreisförmigen Führungsschiene herausragen sowie in einer zylindrischen Bohrung des Grundkörpers als Innenlaufbahn abstützen, wobei die Führungsschiene von Grundkörper und Käfig zumindest teilweise umschlossen wird und der Käfig aus Segmenten aufgebaut ist, an deren axialen Enden Kopfstücke zentriert angeschlossen sind, und die Kugeln unter Zuhilfenahme der Segmente in den Tragabschnitten und den Rückführabschnitten und durch die beiden Kopfstücke, in den die Umlenkung der Kugeln zwischen jeweils einem Tragabschnitt und einem Rückführabschnitt bewirkenden Umlenkabschnitten geführt sind, wobei die Kugeln in den Rückführabschnitten nur durch sie mit Spiel führende Führungsrillen gehalten sind und wobei die Segmente und die Kopfstücke durch Zentrierungen zueinander fixiert sind.

Eine solche Ausführung ist in der FR-A-2 381 204 beschrieben. Dabei ist zur Verbindung der Innensegmente eine Kappe vorgesehen, die am Grundkörper festgelegt ist und einen Zentriervorsprung aufweist, auf dem der Käfig mit seinen Segmenten aufliegt.

Ferner ist in der nach dem Prioritätstag der vorliegenden Anmeldung veröffentlichten EP-A-0 392 261 eine Kugelumlaufeinheit beschrieben, bei der der Käfig aus unterschiedlichen Innensegmenten und gegebenenfalls zusätzlich Stegen aufgebaut sein kann, welche seitliche Führungsausnehmungen besitzen, die zur Führung der Kugeln in den Tragabschnitten dienen.

Für den Fall, daß Stege vorgesehen sind, sind diese den Kopfstücken angeformt. Die Zentrierung und Festlegung der Innensegmente zu den Kopfstücken erfolgt durch Zentrieransätze und Zentrierausnehmungen sowie Zentrierstäbe.

Des weiteren ist aus der US-AS 4 582 370 eine Linearführung mit einer von der Kreisform abweichenden Führungsschiene bekannt, bei der die Führung der Kugeln in den Tragabschnitten und den Rückführabschnitten gemeinsam vom Käfig und dem Grundkörper übernommen wird. Daher weisen Grundkörper und Käfig sich gegenseitig ergänzende Führungen auf. Der Käfig besitzt drei Segmente, die für jeweils zwei Kugelreihen gedacht sind und welche im Grundkörper festgelegt sind. Sie werden durch an ihren Enden zentrierte und die Umlenkabschnitte enthaltende Kopfstücke ergänzt. Bei dieser Ausbildung ist von Nachteil, daß auch der Grundkörper für die Führung der Kugeln in den Tragabschnitten und Rückführabschnitten herangezogen wird. Ferner ist von Nachteil, daß mit den vorgesehenen Elementen keine Variation hinsichtlich der Durchmesseranpassung an verschiedene Führungsdurchmesser einer im Querschnitt kreisförmigen Führungsschiene möglich ist. Die gewählte Anordnung der Führungen für die Kugeln in den Tragabschnitten läßt nur eine Führungsschine zu, die einen vom Kreisquerschnitt abweichenden Querschnitt und Führungsvorsprünge aufweist, die radial in den Bereich der sich im Tragabschnitt befindenden Kugeln hineinragen.

Der Erfindung liegt die Aufgabe zugrunde, eine Kugelumlaufeinheit für eine Linearkugelführung für Führungsschienen mit kreisförmigem Querschnitt vorzuschlagen, die einen Käfig aufweist, der einfach an verschiedene Führungsdurchmesser und die Anzahl und Anordnung der Tragreihen zu deren Optimierung angepaßt werden kann und darüber hinaus einfach herstellbar und montierbar ist.

Diese Aufgabe wird erfindungsgemäß dadurch gelöst, daß der Käfig Innensegmente mit einer Führungsrille, welche einen Rückführabschnitt darstellt und/oder Innensegmente mit zwei Führungsrillen, welche zwei Rückführabschnitte darstellen, als Segmente und ferner Stege umfaßt, wobei die Innensegmente beidseitig und die Stege in Umfangsrichtung ein- oder beidseitig jeweils mit axial verlaufenden Führungsausnehmungen versehen sind und wobei die Kugeln in den Tragabschnitten jeweils durch zwei sich gegenüberliegende und gegenseitig ergänzende Führungsausnehmungen geführt sind, daß die Stege und die Innensegmente zu den Kopfstücken durch Zentrierungen fixiert sind, wobei die Innensegmente mit Zentrierzapfen versehen sind, mit denen sie in Durchgangsbohrungen der Kopfstücke eingreifen und die Stege mit einer Haltenase an radial äußeren Zentrieransätzen die Kopfstücke hakenartig übergreifen und die Baueinheit aus Innensegmenten, Stegen und Kopfstücken zusammenhalten.

Die Teilung in Innensegmente und Kopfstücke sowie Stege erlaubt eine Fertigung mit einfachen Werkzeugen, da die Trennfuge im Bereich der Tragreihen liegt. Die Innensegmente und die Kopfstücke sind dadurch einfach aus Kunststoff durch Spritzgießen herstellbar.

Von Vorteil ist besonders, daß die Montage vereinfacht werden kann, da der Käfig mit einem Kopfstück und sämtlichen Innensegmenten sowie Kugeln vormontiert in den Grundkörper eingeschoben werden kann.

In Ausgestaltung der Erfindung ist vorgesehen, daß die radial inneren Zentrieransätze der Stege in angepaßte Ausnehmungen der Kopfstücke eingreifen.

Zur Sicherung ist vorgeschlagen, daß die Kopfstücke und Stege von Kappen überdeckt sind, die am Grundkörper eingehakt oder an den Kopfstücken und Stegen festgelegt sind.

Bevorzugte Ausführungsbeispiele sind anhand der Zeichnung erläutert.

Es zeigt
- Figur 1: eine erste Ausführungsform der Kugelumlaufeinheit mit einem zwei Gruppen von beide Arten von Innensegmenten aufweisenden Käfig und mit einem Grundkörper, der die Führungsschiene vollständig umschließt, im Querschnitt
- Figur 2: eine zweite Ausführung mit einem drei Gruppen von beide Arten von Innensegmente aufweisenden Käfig und mit einem Grundkörper, der die Führungsschiene vollständig umschließt,
- Figur 3: eine dritte Ausführungsform der Kugelumlaufeinheit, bei dem der Grundkörper die im Querschnitt kreisförmige Schiene nur teilweise umschließt, wobei der Käfig ebenfalls beide Arten von Innensegmenten aufweist,
- Figur 4: einen Schnitt A-B gemäß Figur 1, jedoch nur bezüglich eines Endabschnittes hinsichtlich der Verbindung eines Steges mit einem Kopfstück,
- Figur 5: einen Schnitt C-D gemäß Figur 1, vergleichbar zu Figur 4 für eine alternative Festlegung der Kappen.
- Figur 6: einen Schnitt E-F gemäß Figur 1, und
- Figur 7: einen Schnitt G-H gemäß Figur 4.

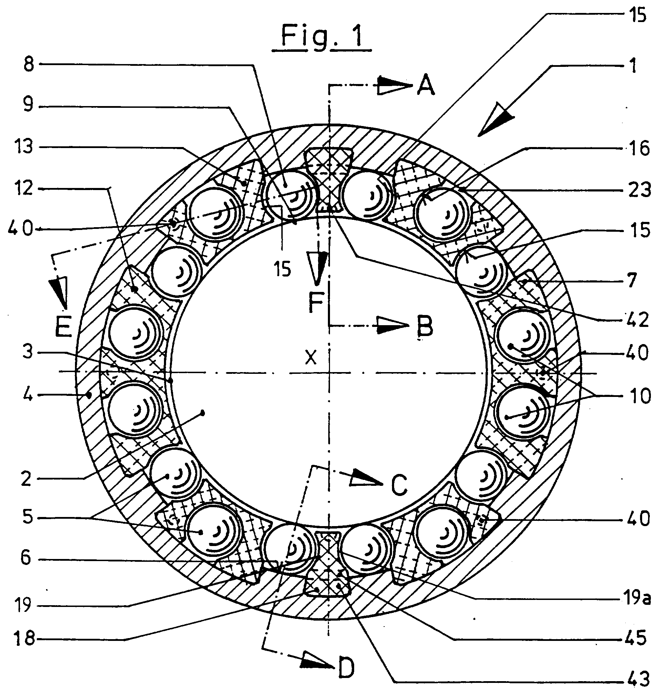

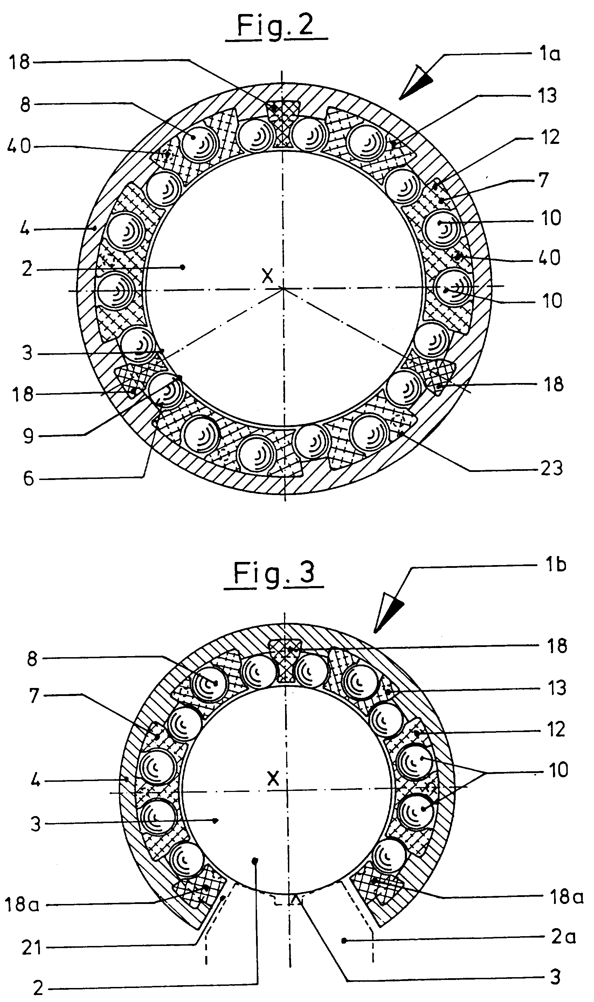

Die Kugelumlaufeinheit 1 nach den Figuren 1 und 2 umfaßt eine Führungsschiene 2 über deren gesamten Querschnitt. Auf der Außenfläche 3 der Führungsschiene 2 liegen die in den Tragabschnitten 9 befindlichen Kugeln 8 der Kugelreihen 5 an. Die Kugeln 8 der Kugelreihen 5 werden durch einen Käfig 7 gehalten. Im Tragabschnitt 9, das ist der Abschnitt, aus dem die Kugeln 8 radial nach innen aus dem Käfig 7 herausragen, stützen sie sich einerseits an der Außenfläche 3 der Führungsschiene 2 und andererseits an der Innenlaufbahn 6 des Grundkörpers 4 ab. Die Kugelreihen 5 werden jeweils aus den Tragabschnitten 9, den Rückführabschnitten 10 und beide an den Enden des Grundkörpers 4 verbindende Umlenkabschnitte 11 gebildet. In den Umlenkabschnitten 11 werden die Kugeln 5 von der Außenfläche 3 der Führungsschiene 2 radial nach außen weg geführt. Sie werden in den Rückführab-schnitten 11 mit Spiel geführt. Die Kugelreihen 5 bilden jeweils eine endlose Reihe. Es ist erkennbar, daß bei der Ausführungsform nach Figur 1 zwei Paare von Kugelreihen 5 mit einem kleineren Umfangsabstand zueinander angeordnet sind, als die Tragabschnitte 9 dieser Paare 5 zu den in Umfangsrichtung folgenden Tragabschnitten 9 der nachfolgenden Kugelreihen 5.

Bei dem Ausführungsbeispiel nach den Figuren 1 und 4 bis 7 ist ein Käfig 7 vorgesehen, der aus zwei Arten von Innensegmenten 12,13 und den beiden Kopfstücken 14 und Stegen 18 gebildet wird.

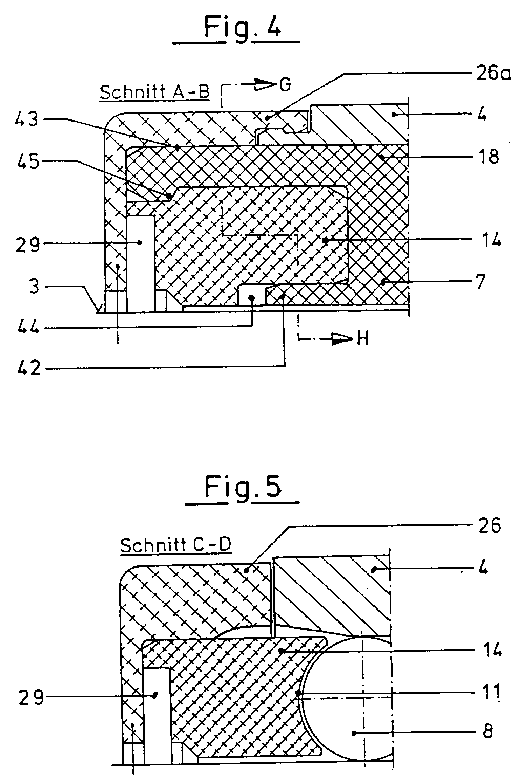

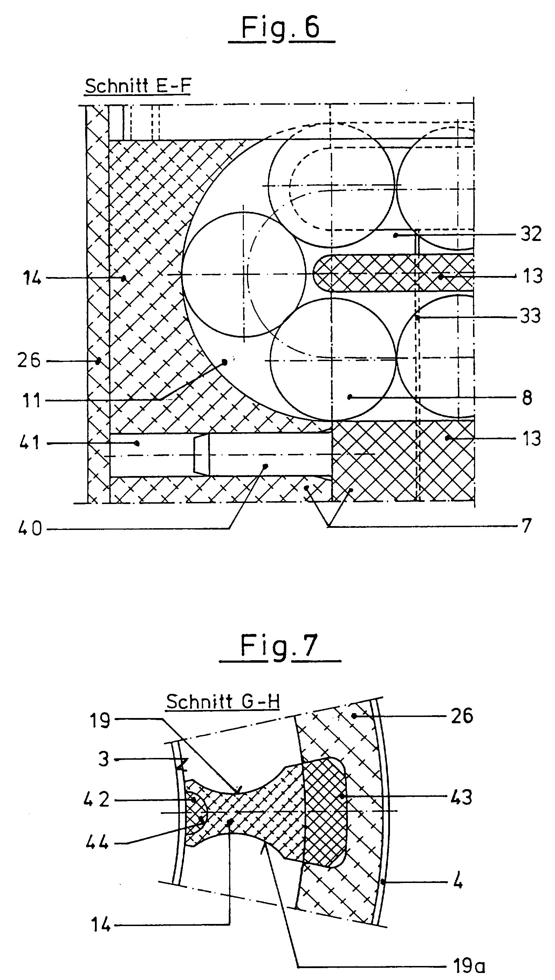

Es ist erkennbar, daß insgesamt vier erste Innensegmente 13 und zwei zweite Innensegmente 12 vorhanden sind. Die ersten Innensegmente 13 und zweiten Innensegmente 12 sind abwechselnd angeordnet. Das erste Innensegment 13 hat nur eine Führungsrille 16, welche den Rückführabschnitt 10 einer Kugelreihe 5 bildet. Die ersten Innensegmente 13 haben darüberhinaus seitliche Führungsausnehmungen 15, die zur Halterung und Führung der Kugeln 5 in den Tragabschnitten 9 dienen. An deren den Kopfstücken 14 zugewandten Enden sind Zentrierzapfen 40 angebracht, die parallel zur Führungsachse der Führungsrillen 16 bzw. zur Längsachse X verlaufen. Zwischen den ersten Innensegmenten 13 sind gemäß Figur 1 die zweiten Innensegmente 12 angeordnet. Die zweiten Innensegmente 12 umfassen zwei Führungsrillen16 für zwei Kugelreihen 5. Zwischen diesen sind an den Kopfenden ebenfalls zur Achse X und zum Verlauf der Achse der Führungsrillen 16 parallele Zentrierzapfen 40 vorhanden. An den axialen Enden der zweiten Innensegmente 12 sind zwischen den Führungsrillen 16 und den zugehörigen Führungsausnehmungen 15 halbkreisförmige Ausnehmungen angeordnet, die zusammen mit entsprechenden Ausnehmungen der Kopfstücke 14 Umlenkabschnitte 11 bilden (Fig. 5, 6).

Die ersten und zweiten Innensegmente 13,12 sind in Ausnehmungen 23, die sich parallel zur Achse X im Grundkörper 4 erstrecken, aufgenommen. Hierdurch wird eine drehfeste Verbindung zwischen dem Grundkörper 4 und den Innensegmenten 12,13 erzielt. Die Kopfstücke 14 sind von den Stirnflächen des Grundkörpers 4 her eingesetzt. Die Kopfstücke 14 und die Innensegmente 12, 13 sind einander gegenüber durch einen Zentrieransatz 32 am Kopfstück 14, der in eine Zentrierausnehmung 33 der Innensegmente 12,13 ragt, zentriert. Hierzu dienen ferner auch die Zentrierzapfen 40 der Innensegmente 12, 13, die in Durchgangsbohrungen 41 der Kopfstücke 14 hineinragen. Zwischen zwei eng benachbarten Tragreihen 9 befinden sich Stege 18, die sich entlang der Längsachse X etwa über die Länge des Grundkörpers 4 erstrecken. Sie stoßen mit ihren Stirnflächen an den Kopfstücken 14 an. Die Stege 18 sind auf ihrer radial äußeren Fläche der Form einer Ausnehmung 25 des Grundkörpers 4 angepaßt. Die Stege 18 weisen seitlich zu den Kugeln 5 der Tragabschnitte 9 hin Führungsausnehmungen 19 auf, die die Kugeln 8 teilweise umfassen und zusammen mit den Führungsausnehmungen 15 der in Umfangsrichtung folgenden Innensegmente 13 die Kugeln 8 gegen radiales Herausfallen nach innen im unmontierten Zustand der Kugelumlaufeinheit, d.h. dann, wenn diese noch nicht auf einer Führungsschiene 2 montiert ist, halten. Die Führungsausnehmungen 19 der Kopfstücke 14 gehen in Ausnehmungen über, die die Umlenkabschnitte 11 bilden. Die Stege 18 besitzen radial außen und innen Zentrieransätze 42, 43 mit denen sie die Kopfstücke 14 unter- bzw. übergreifen. Der Zentriersatz 42 greift in eine angepaßte Ausnehmung 44 des Kopfstücks 14. Der äußere Zentrieransatz 43 übergreift mit einer Haltenase 45 hakenartig das Kopfstück 14 und hält die Baueinheit aus Innensegmenten 12, 13, Stegen 18 und Kopfstücken 14 zusammen. Es ist ferner erkennbar, daß jeweils zwei Gruppen von Segmentanordnungen gebildet sind, die jeweils aus einem zweiten Innensegment 12 und zwei ersten Innensegmenten 13 bestehen und welche durch die beiden Stege 18 getrennt sind. Es sind anzahlmäßig soviele Stege 18 vorhanden, wie Gruppen gebildet sind. Die Kopfstücke 14 und Stege 18 werden von Kappen 26,26a überdeckt, die beispielsweise aus Blech hergestellt sind und entweder am Grundkörper 4 eingehakt sind (Figur 4) oder an den Kopfstücken 14 und Stegen 18 festgelegt sind und sich mit ihren Stirnrändern axial an den Stirnflächen des Grundkörpers 4 (Fig. 5) anlegen. Zwischen der Kappe 26 und dem Rücksprung des Kopfstückes 14 wird eine Ausnehmung 29 für die Anbringung einer Dichtung gebildet.

Beim Ausführungsbeispiel der Kugelumlaufeinheit 1a nach Figur 2 sind drei Gruppen von Innensegmenten 12, 13 an einem geschlossenen Grundkörper 4 angeordnet. Die drei Gruppen bestehen jeweils aus einem ersten und einem zweiten Innensegment 12, 13. Zwischen mit kurzem Abstand benachbarten Tragreihen 9 zweier in Umfangsrichtung aufeinanderfolgender Gruppen ist jeweils ein Steg 18 angeordnet. Diese sind, wie im Zusammenhang mit Figur 1 beschrieben ausgebildet. Der einzige Unterschied zur Ausbildung gemäß Figur 1 besteht darin, daß drei Gruppen und damit drei Stege 18 anstelle von zweien vorhanden sind.

In Figur 3 ist eine alternative Ausführungsform für eine Kugelumlaufeinheit 1b dargestellt. Diese weist einen Grundkörper 4 auf, der geschlitzt ist und wobei die Führungsschiene 2 nur teilweise umfaßt ist. Der Schlitz des Grundkörpers ist mit 21 bezeichnet. Die Führungsschiene 2 ist an einem Befestigungselement 2a angebracht, welches widerum auf einer Unterlage befestigbar ist. Insgesamt sind nur sechs Kugelreihen 5 vorhanden. Es sind zwei erste Innensegmente 13 und zwei zweite Innensegmente 12 vorhanden, welche, wie im Zusammenhang mit Figur 1 beschrieben, gestaltet sind und aus zwei Gruppen mit jeweils einem ersten und einem zweiten Innensegment 12, 13 bestehen. Es ist ein Steg 18 zwischen Tragabschnitten 9 der mit kurzem Abstand angeordneten oberen Kugelreihen 5 entsprechend der Ausbildung nach Figur 1 vorhanden. Zum Schlitz 21 des Grundkörpers 4 hin sind jedoch jeweils zwei Halbstege 18a, die jeweils nur eine Führungsausnehmung 19a aufweisen, angeordnet. Der zweite Steg ist also in zwei Halbstege 18a geteilt. Die Halbstege 18a entsprechen hinsichtlich ihrer Anbindung an die Kopfstücke der der Stege 18 gemäß Figur 1.

### Bezugszeichenliste

- 1,1a,1b: Kugelumlaufeinheit
- 2: Führungssschiene
- 2a: Befestigungselement
- 3: Außenfläche der Führungsschiene
- 4: Grundkörper
- 5: Kugelreihen
- 6: Innenlaufbahn des Grundkörpers
- 7: Käfig
- 8: Kugel
- 9: Tragabschnitt
- 10: Rückführabschnitt
- 11: Umlenkabschnitt
- 12: zweite Innensegmente
- 13: erste Innensegmente
- 14: Kopfstück
- 15: Führungsausnehmung an Innensegmenten
- 16: Führungsrillen in Innensegmenten
- 18,18a: Stege
- 19,19a: Führungsausnehmung der Stege
- 21: Schlitz
- 23: Ausnehmung im Grundkörper
- 26,26a: Kappe
- 29: Ausnehmung für Dichtung
- 32: Zentrieransatz Kopfstück
- 33: Zentrierausnehmung Innensegment
- 40: Zentrierzapfen
- 41: Durchgangsbohrung
- 42: innerer Zentrieransatz der Stege
- 43: äußerer Zentrieransatz der Stege
- 44: Ausnehmung
- 45: Haltenase des äußeren Zentriersatzes der Stege
- X: Längsachse

## Patentansprüche

1. Kugelumlaufeinheit für eine Linearführung, mit einem Grundkörper (4) und einem im Grundkörper (4) angeordneten Käfig (7), in dem, über dem Querschnitt verteilt, Kugelreihen (5) angeordnet sind, deren sich im Tragabschnitt (9) befindlichen Kugeln (8) aus dem Käfig (7) radial nach innen zwecks Abstützung an einer im Querschnitt kreisförmigen Führungsschiene (2) herausragen sowie in einer zylindrischen Bohrung (6) des Grundkörpers (4) als Innenlaufbahn (6) abstützen, wobei die Führungsschiene (2) von Grundkörper (4) und Käfig (7) zumindest teilweise umschlossen wird und der Käfig (7) aus Segmenten (12, 13) aufgebaut ist, an deren axialen Enden Kopfstücke (14) zentriert angeschlossen sind, und die Kugeln (8) unter Zuhilfenahme der Segmente (12, 13) in den Tragabschnitten (9) und den Rückführabschnitten (10) und durch die beiden Kopfstücke (14), in den die Umlenkung der Kugeln (8) zwischen jeweils einem Tragabschnitt (9) und einem Rückführabschnitt (10) bewirkenden Umlenkabschnitten (11) geführt sind, wobei die Kugeln (8) in den Rückführab-schnitten (10) nur durch sie mit Spiel führende Führungsrillen (16) gehalten sind und wobei die Segmente (12, 13) und die Kopfstücke (14) durch Zentrierungen zueinander fixiert sind,
dadurch gekennzeichnet,
daß der Käfig (7) Innensegmente (13) mit einer Führungsrille (16), welche einen Rückführabschnitt (10) darstellt und/oder Innensegmente (12) mit zwei Führungsrillen (16), welche zwei Rückführabschnitte (10) darstellen, als Segmente und ferner Stege (18,18a) umfaßt, wobei die Innensegmente (12,13) beidseitig und die Stege (18,18a) in Umfangsrichtung ein- oder beidseitig jeweils mit axial verlaufenden Führungsausnehmungen (15,19,19a) versehen sind und wobei die Kugeln (8) in den Tragabschnitten (9) jeweils durch zwei sich gegenüberliegende und gegenseitig ergänzende Führungsausnehmungen geführt sind, daß die Stege (18,18a) und die Innensegmente (12,13) zu den Kopfstücken (14) durch Zentrierungen fixiert sind, wobei die Innensegmente (12,13) mit Zentrierzapfen (40) versehen sind, mit denen sie in Durchgangsbohrungen (41) der Kopfstücke (14) eingreifen und die Stege (18,18a) mit einer Haltenase (45) an radial äußeren Zentrieransätzen (43) die Kopfstücke (14) hakenartig übergreifen und die Baueinheit aus Innensegmenten (12,13), Stegen (18,18a) und Kopfstücken (14) zusammenhalten.

2. Kugelumlaufeinheit nach Anspruch 1,
dadurch gekennzeichnet,
daß die radial inneren Zentrieransätze (42) der Stege (18, 18a) in angepaßte Ausnehmungen (44) der Kopfstücke (14) eingreifen.

3. Kugelumlaufeinheit nach einem der Ansprüche 1 oder 2,
dadurch gekennzeichnet,
daß die Kopfstücke (14) und Stege (18, 18a) von Kappen (26, 26a) überdeckt sind, die am Grundkörper (4) eingehakt oder an den Kopfstücken (14) und Stegen (18, 18a) festgelegt sind.

## Claims

1. A ball circulation unit for a linear bearing, having a base (4) and a cage (7) which is arranged in the base (4) and in which there are arranged cross-sectionally distributed ball rows (5) wherein, for the purpose of being supported on a guiding rail (2) with a circular cross-section, the balls (8) positioned in the carrying portion (9) project radially Inwardly from the cage (7) and are supported in a cylindrical bore (6) of the base (4) constituting an Inner track (6), with the guiding rail (2) being at least partially enclosed by the base (4) and the cage (7) and with the cage (7) being assembled of segments (12, 13), with head pieces (14) being connected in a centred way to the axial ends of said segments (12, 13) and with the balls (8) being guided with the assistance of the segments (12, 13) in the carrying portions (9) and in the returning portions (10) and, by means of the head pieces (14), in the deflecting portions (10) effecting the deflection of the balls (8) between a carrying portion (9) and a returning portion (10), with the balls (8) being held in the returning portions (10) entirely by guiding grooves (16) guiding same with play and with the segments (12, 13) and the head pieces (14) being fixed relative to one another by centring means,
characterised in
that the cage (7) comprises segments in the form of inner segments (13) with one guiding groove (16) constituting one returning portion (10) and/or inner segments (12) with two guiding grooves (16) constituting two returning portions (10), and also webs (18, 18a), with the inner segments (12, 13) on both sides and the webs (18, 18a) in the circumferential direction on one side or on both sides being provided with respective axially extending guiding recesses (15, 19, 19a) and with the balls (8) in the carrying portions (9) each being guided by two opposed guiding recesses complementing one another; that the webs (18, 18a) and the inner segments (12, 13) are fixed relative to the inner segments (12, 13) by means of centring means, with the inner sgements (12, 13) being provided with centring journals (40) by means of which they engage through-bores (41) of the head pieces (14) and with the webs (18, 18a), by means of a holding lug (45) at radially outer centring projections (43), extending over the head pieces (14) in a hook-like way while holding together the assembly consisting of the Inner segments (12, 13), the webs (18, 18a) and the head pieces (14).

2. A ball circulation unit according to claim 1,
characterised in
that the radially inner centring projections (42) of the webs (18, 18a) engage adapted recesses (44) in the head pieces (14).

3. A ball circulation unit according to any one of claims 1 or 2,
characterised in
that the head pieces (14) and webs (18, 18a) are covered by caps (26, 26a) and are hooked on to the base (4) or secured to the head pieces (14) and webs (18, 18a).

## Revendications

1. Unité à recirculation de billes pour un guidage linéaire, comportant un corps de base (4) et une cage (7) agencée dans le corps de base (4), dans laquelle sont agencées, en répartition sur la section transversale, des rangées de billes (5) dont les billes (8) situées dans le tronçon de support (9) dépassent hors de la cage (7) radialement vers l'intérieur pour le soutien contre un rail de guidage (2) circulaire en section transversale, et s'appuient dans un perçage cylindrique (6) du corps de base (4) en tant que voie de roulement intérieure (6), le rail de guidage (2) étant entouré du moins partiellement par le corps de base (4) et par la cage (7), et la cage (7) étant constituée de segments (12, 13), aux extrémités axiales desquels sont raccordés de façon centrée des parties de tête (14), et les billes (8) étant guidées à l'aide des segments (12, 13) dans les tronçons de support (9) et les tronçons de retour (10) et par les deux parties de tête (14) dans les tronçons de renvoi (il) entraînant le renvoi des billes (8) entre un tronçon de support respectif (9) et un tronçon de retour (10), et les billes (8) étant retenues dans les tronçons de retour (10) par les seules rainures de guidage (16) qui guident ces billes avec jeu, et les segments (12, 13) et les parties de tête (14) étant fixés les uns par rapport aux autres par des dispositifs de centrage,
caractérisée en ce que
la cage (7) comporte des segments intérieurs (13) avec une rainure de guidage (16) qui représente un tronçon de retour (10), et/ou des segments intérieurs (12) avec deux rainures de guidage (16) qui représentent deux tronçons de retour (10), en tant que segments, et la cage comportant en outre des barrettes (18, 18a), les segments intérieurs (12, 13) étant pourvus des deux côtés, et les barrettes (18, 18a) étant pourvues sur un ou sur deux côtés en direction périphérique, d'évidements de guidage (15, 19, 19a) respectifs qui s'étendent axialement, et les billes (8) dans les tronçons de support (9) étant guidées respectivement par deux évidements de guidage en vis-à-vis et se complétant mutuellement, en ce que les barrettes (18, 18a) et les segments intérieurs (12, 13) sont fixés par rapport aux parties de tête (14) par des dispositifs de centrage, les segments intérieurs (12, 13) étant pourvus de tenons de centrage (40) par lesquels ils s'engagent dans des perçages de passage (41) des parties de tête (14), et les barrettes (18, 18a) recouvrent les parties de tête (14) à la matière de crochets par un doigt de retenue (45) sur des talons de centrage radiaux extérieurs (43) et maintiennent assemblée l'unité structurelle constituée par les segments intérieurs (12, 13), par les barrettes (18, 18a) et par les parties de tête (14).

2. Unité à recirculation de billes selon la revendication 1, caractérisée en ce que
les talons de centrage radiaux intérieurs (42) des barrettes (18, 18a) s'engagent dans des évidements adaptés (44) des parties de tête (14).

3. Unité à recirculation de billes selon l'une ou l'autre des revendications 1 et 2, caractérisée en ce que
les parties de tête (14) et les barrettes (18, 18a) sont recouvertes par des capuchons (26, 26a) qui sont accrochés sur le corps de base (4) ou fixés sur les parties de tête (14) et les barrettes (18, 18a).
